# DEMANDE DE BREVET EUROPEEN

(11) **EP 1 516 776 A1**
(43) Date de publication de la demande: **23.03.2005**
(21) Numéro de dépôt: 04300542.0
(22) Date de dépôt: 16.08.2004
(51) Int. Cl.: B60N 2/34, B60N 2/14

(54) **Agencement pour un véhicule automobile comportant des sièges arrière déployables sur le plancher**

(30) Priorité: 21.08.2003 FR 0310082
(71) Demandeur: Renault s.a.s., 92100 Boulogne Billancourt (FR)
(72) Inventeur: Michelin, Didier, 78990 Elancourt (FR)

(57) **Abrégé**

L'invention propose un agencement (12) pour un habitacle (11) de véhicule automobile (10), comportant sur un plancher (26) au moins une paire (14) de sièges (16) latéraux avant indépendants, une paire (18) de sièges (20) latéraux intermédiaires indépendants et amovibles et une paire (22) de sièges (24) latéraux arrière indépendants non amovibles, caractérisé en ce que au moins les sièges (24) latéraux arrière sont susceptibles d'être développés à plat sur le plancher (26) pour permettre différentes configurations supplémentaires de l'habitacle du véhicule.

## Description

L'invention concerne un agencement pour un habitacle de véhicule automobile.

L'invention concerne plus particulièrement un agencement pour un habitacle de véhicule automobile, du type dans lequel un plancher plat du véhicule porte au moins une paire de sièges latéraux avant indépendants, une paire de sièges latéraux intermédiaires indépendants et amovibles et une paire de sièges latéraux arrière indépendants, les sièges de chaque paire étant agencés symétriquement de part et d'autre d'un axe longitudinal médian du véhicule, et chaque siège comportant au moins un dossier articulé sur une assise, du type qui est susceptible de déterminer au moins une configuration d'occupation de l'habitacle par des passagers dans laquelle les sièges sont ouverts pour permettre l'accueil de passagers.

On connaît de nombreux exemples d'agencements de ce type.

Il est notamment connu des agencements pour habitacle de véhicule automobile permettant de replier le dossier de chaque siège arrière sur son assise pour former une surface de chargement. Un tel agencement est par exemple décrit dans le document US-A-5.492.386.

Cette conception présente l'inconvénient, du fait des épaisseurs cumulées, de ne proposer qu'une surface de chargement nécessairement surélevée, ce qui la rend d'une utilisation peu pratique.

Il est aussi connu des agencements permettant de déployer les sièges intermédiaires du véhicule pour les transformer en couchettes.

Cette conception présente l'inconvénient de nécessiter un démontage des sièges arrière et leur extraction hors du véhicule préalablement au déploiement des sièges intermédiaires.

Cette conception présente aussi l'inconvénient de limiter les longueurs des couchettes ainsi obtenues à la somme des longueurs des assises et des dossiers des sièges intermédiaires. De ce fait, les longueurs de couchettes obtenues sont généralement insuffisantes pour des individus de grande taille.

Enfin, la plupart des planchers des véhicules connus n'étant pas plats, la modularité du véhicule n'est pas optimisée.

L'invention propose de remédier à ces inconvénients à l'aide d'une nouvelle configuration de déploiement des sièges arrière.

Dans ce but, l'invention propose une agencement du type décrit précédemment, caractérisé en ce que au moins les sièges latéraux arrière sont susceptibles d'être développés à plat sur le plancher pour permettre différentes configurations supplémentaires de l'habitacle du véhicule.

Cette configuration est d'autant plus avantageuse que, le plancher du véhicule étant plat, les sièges latéraux arrière permettent de bénéficier d'une grande modularité du véhicule.

Selon d'autres caractéristiques de l'invention :
- selon une première configuration supplémentaire utilitaire de l'habitacle, les sièges latéraux intermédiaires sont ouverts pour permettre l'accueil de passagers et les sièges latéraux arrière sont développés à plat sur le plancher du véhicule de manière qu'une face inférieure de l'assise et une face arrière du dossier des sièges latéraux arrière constituent un faux-plancher plat du véhicule,
- selon une deuxième configuration supplémentaire utilitaire de l'habitacle, les sièges latéraux intermédiaires sont repliés dossier contre assise et rangés dans une position verticale au dos des sièges avants, et les sièges latéraux arrière sont développés à plat sur le plancher du véhicule de manière qu'une face inférieure de l'assise et une face arrière du dossier des sièges latéraux arrière constituent un faux-plancher plat du véhicule,
- selon une troisième configuration supplémentaire de couchage de l'habitacle, les sièges latéraux arrière sont développés à plat sur le plancher du véhicule et les sièges latéraux intermédiaires sont développés au dessus du niveau des sièges latéraux arrière de manière qu'une face supérieure de l'assise et une face avant du dossier des sièges latéraux intermédiaires constituent chacun une couchette,
- l'agencement comporte une tablette arrière, qui comporte au moins un panneau comportant une garniture souple d'une épaisseur correspondant à celle de l'assise ou du dossier d'un siège, et qui :
   - dans la configuration d'occupation de l'habitacle par des passagers, est accrochée à des éléments latéraux du véhicule, en arrière des sièges latéraux arrière, à une première hauteur déterminée, la garniture souple tournée vers le plancher, pour délimiter un compartiment à bagages,
   - dans la deuxième configuration supplémentaire utilitaire est susceptible d'être posée, panneaux repliés, sur le plancher plat du véhicule entre les sièges latéraux intermédiaires verticaux et les sièges latéraux arrière déployés pour prolonger le faux plancher plat du véhicule, et
   - dans la troisième configuration supplémentaire de couchage de l'habitacle, est susceptible d'être accrochée à des éléments latéraux du véhicule en arrière des sièges latéraux intermédiaires, à une seconde hauteur déterminée correspondant à celle des sièges latéraux intermédiaires, la garniture souple tournée vers un pavillon du véhicule,
- la tablette arrière comporte deux panneaux articulés l'un par rapport à l'autre dont l'un comporte la garniture souple,
- dans la deuxième configuration supplémentaire utilitaire, la tablette est susceptible d'être posée, panneaux repliés, sur le plancher plat du véhicule entre les sièges latéraux intermédiaires verticaux et les sièges latéraux arrière déployés pour prolonger le faux plancher plat du véhicule,
- dans la troisième configuration supplémentaire de couchage de l'habitacle, la tablette est susceptible d'être accrochée aux éléments latéraux du véhicule en arrière des sièges latéraux intermédiaires, à la seconde hauteur déterminée correspondant à celle des sièges latéraux intermédiaires, la garniture souple d'un panneau tournée vers un pavillon du véhicule, et une garniture souple amovible supplémentaire posée sur le panneau libre, pour prolonger les couchettes du véhicule,
- les sièges intermédiaires sont pivotants,
- dans la deuxième configuration supplémentaire de couchage de l'habitacle, les sièges intermédiaires sont pivotés vers l'arrière du véhicule,
- l'agencement comporte au moins un siège central qui est coulissant sur le plancher suivant l'axe longitudinal médian du véhicule, et qui est susceptible :
   - dans la configuration d'occupation de l'habitacle, d'être agencé entre au moins une position dans laquelle le siège central est agencé entre les sièges latéraux intermédiaires et au moins une position dans laquelle le siège central est agencé entre les sièges latéraux arrière, et :
      ■ d'être ouvert pour proposer une place supplémentaire, ou bien
      ■ d'être basculé pour que la face arrière du dossier du siège central forme une tablette agencée entre les sièges intermédiaires ou entre les sièges arrière,
- dans la première configuration utilitaire de l'habitacle, d'être basculé pour que la face arrière du dossier du siège central forme une tablette agencée entre les sièges intermédiaires,
- dans la deuxième configuration utilitaire de l'habitacle, d'être développé à plat sur le plancher du véhicule de manière qu'une face inférieure de l'assise et une face arrière du dossier du siège central fassent partie du faux-plancher plat du véhicule,
- dans la troisième configuration de couchage de l'habitacle, d'être agencé entre les sièges intermédiaires et développé à plat au dessus du niveau des sièges latéraux arrière de manière qu'une face supérieure de l'assise et une face avant du dossier du siège central fasse partie de la couchette,
- l'agencement comporte au moins un coffret de rangement destiné à être agencé en arrière des sièges arrière déployés, pour prolonger le volume de chargement vers l'arrière du véhicule,
- les sièges avant sont pivotants,
- l'agencement comporte une tablette qui est susceptible d'être fixée à au moins un élément latéral du véhicule entre deux paires de sièges.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus d'un agencement selon l'invention,
- la figure 2 est une vue schématique en coupe d'un agencement selon une configuration d'occupation de l'habitacle par des passagers du véhicule,
- la figure 3 est une vue schématique en coupe d'un agencement selon une première configuration supplémentaire utilitaire de l'habitacle du véhicule,
- la figure 4 est une vue schématique en coupe d'un agencement selon une première variante de la première configuration supplémentaire utilitaire de l'habitacle du véhicule,
- la figure 5 est une vue schématique en coupe d'un agencement selon une deuxième configuration supplémentaire utilitaire de l'habitacle du véhicule,
- la figure 6 est une vue schématique en coupe d'un agencement selon une troisième configuration supplémentaire de couchage de l'habitacle,
- la figure 7 est une vue schématique en coupe d'un agencement selon une deuxième variante de la première configuration supplémentaire utilitaire de l'habitacle du véhicule,
- la figure 8 est une vue schématique en coupe d'un agencement selon une troisième variante de la première configuration supplémentaire utilitaire de l'habitacle du véhicule,
- la figure 9 est une vue schématique en coupe d'un agencement selon une variante de la configuration d'occupation de l'habitacle par des passagers du véhicule,

Dans la description qui va suivre, des chiffres de référence identiques désignent des pièces identiques ou ayant des fonctions similaires.

Par convention, les termes "avant", "arrière", "droit" ou "gauche" désignent respectivement des éléments ou des positions orientés respectivement vers la gauche, la droite, le haut ou le bas des figures.

Dans la suite de la présente description, l'expression "siège ouvert" désigne un siège dont l'assise et le dossier forment un angle voisin de 90 degrés permettant d'accueillir un passager en position assise, l'expression "siège développé" désigne un siège dont l'assise et le dossier forment un angle voisin de 180 degrés, et l'expression "siège replié" désigne un siège dont l'assise et le dossier forment un angle voisin de 0 degrés.

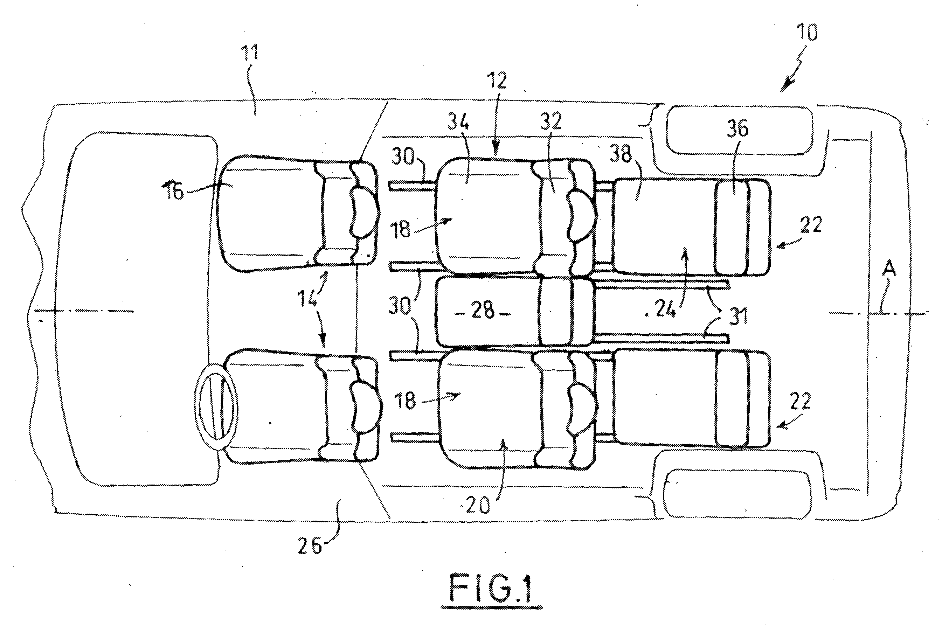

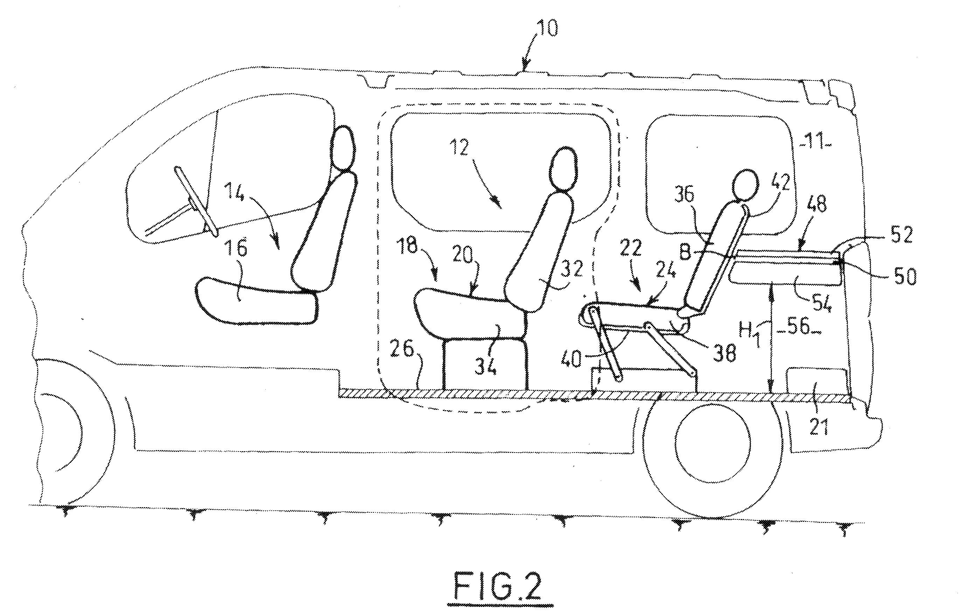

On a représenté aux figures 1 et 2 un véhicule automobile 10 dont un habitacle 11 est destiné à recevoir un agencement 12 selon l'invention.

Sur la figure 1, le véhicule 10 est un fourgon de type vitré, mais cette configuration n'est pas limitative de l'invention.

L'agencement 12 peut en effet trouver à s'appliquer à tout type de véhicule 10 suffisamment long pour comporter au moins trois paires de sièges, par exemple un véhicule de type "monospace".

De manière connue, l'agencement 12 comporte un plancher 26 qui porte une paire 14 de sièges 16 latéraux avant indépendants, une paire 18 de sièges 20 latéraux intermédiaires indépendants, et une paire 22 de sièges 24 latéraux arrière indépendants.

Les sièges 16, 20, 24 de chaque paire 14, 18, 22 sont agencés symétriquement de part et d'autre d'un axe "A" longitudinal médian du véhicule 10.

Dans l'exemple représenté, les sièges 20 latéraux intermédiaires indépendants sont amovibles et ils sont montés coulissants sur des rails 30 disposés chacun de part et d'autre de l'axe "A" médian du véhicule. Les sièges 24 latéraux arrière indépendants ne sont pas amovibles mais ils sont eux aussi montés coulissants sur les rails 30.

Cette disposition n'est pas limitative de l'invention, et, en variante (non représentée), les sièges 24 latéraux arrière indépendants pourraient être amovibles, et ils pourraient être montés sur des rails différents des rails 30.

Chaque siège comporte au moins un dossier articulé sur une assise. Ainsi, les sièges intermédiaires 20 comportent plus particulièrement un dossier 32 articulé, sur une assise 34 et les sièges arrière comportent un dossier 36 articulé sur une assise 38.

L'agencement 12 comporte par ailleurs au moins un siège 28 central mobile sur le plancher 26 suivant l'axe "A" longitudinal médian du véhicule entre au moins une position dans laquelle le siège 28 central est agencé entre les sièges 20 latéraux intermédiaires et au moins une position dans laquelle le siège 28 central est agencé entre les sièges 24 latéraux arrière.

Dans le mode de réalisation préféré de l'invention, le siège 28 central est monté coulissant sur au moins un rail 31 le long de l'axe longitudinal médian "A" du véhicule, Cette configuration n'est toutefois pas limitative de l'invention, et le siège 28 central pourrait être mobile et amovible suivant un ensemble de positions longitudinales déterminées, obtenues par exemple par déboîtement et emboîtement du siège 28 sur des moyens de fixation répartis à intervalles réguliers le long de l'axe médian "A" du véhicule.

Comme l'illustrent les figures 1, 2 et 9, l'agencement 12 est susceptible de déterminer au moins une configuration d'occupation de l'habitacle par des passagers dans laquelle les sièges 16, 20 et 24 sont ouverts pour permettre l'accueil de passagers.

Dans la configuration des figures 1 et 2, les sièges 16, 20, et 24 sont tous tournés vers l'avant, c'est à dire dans le sens de la marche du véhicule. Cette configuration permet d'accueillir au maximum sept passagers dans le véhicule.

Conformément à l'invention, les sièges avant 16 et les sièges intermédiaires 20 sont pivotants. Par exemple, les sièges avant 16 et intermédiaires 20 sont montés pivotants chacun sur un support (non représenté) qui est monté coulissant sur les rails, notamment les rails 30 en ce qui concerne les sièges intermédiaires 20, de manière à proposer une grande variété de positions et à proposer une manipulation aisée.

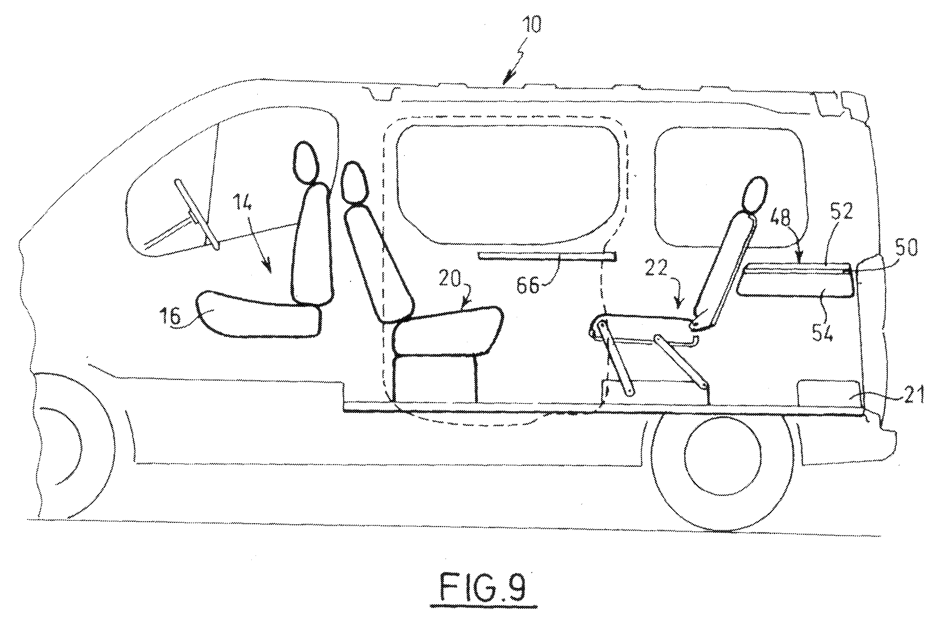

Ainsi, comme l'illustre notamment la figure 9, dans une variante de la configuration d'occupation de l'habitacle par des passagers, les sièges 20 intermédiaires sont pivotés vers l'arrière du véhicule pour permettre d'utiliser l'habitacle de manière conviviale, comme on le verra ultérieurement dans la suite de la présente description.

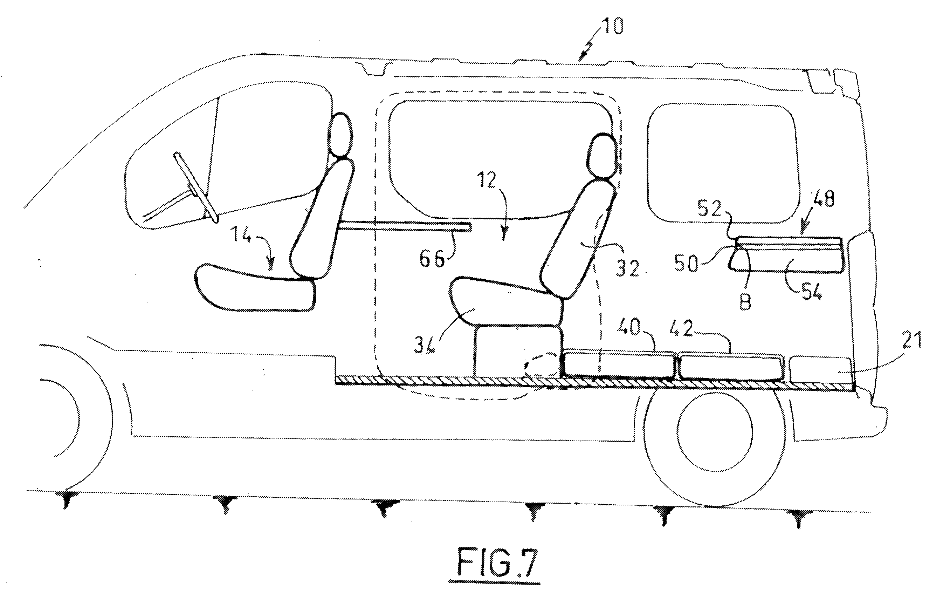

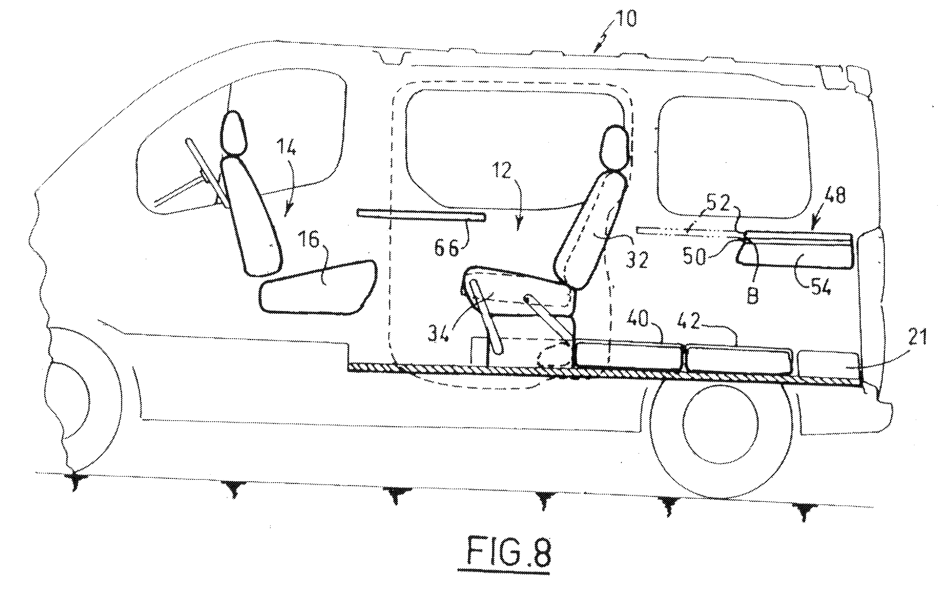

Conformément à l'invention, comme l'illustrent les figures 2 à 8, au moins les sièges 24 latéraux arrière sont susceptibles d'être développés à plat sur le plancher 26 pour permettre différentes configurations supplémentaires de l'habitacle 11 du véhicule.

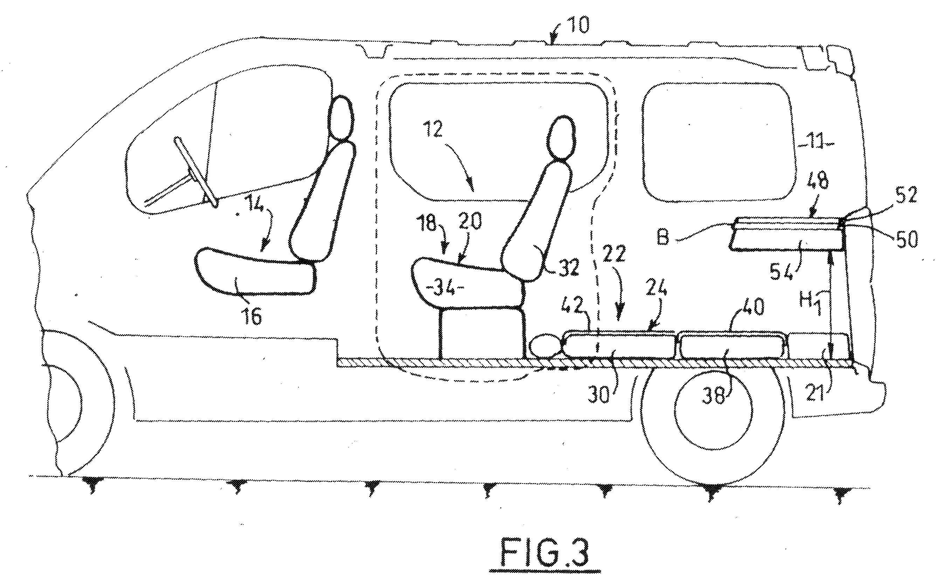

Plus particulièrement, comme l'illustre la figure 3, selon une première configuration supplémentaire utilitaire de l'habitacle 11, les sièges latéraux 20 intermédiaires sont ouverts pour permettre l'accueil de passagers et les sièges 24 latéraux arrière sont développés à plat sur le plancher 26 du véhicule de manière qu'une face inférieure 40 de l'assise 38 et une face arrière 42 du dossier 36 des sièges latéraux arrière 24 constituent un faux-plancher plat du véhicule 10. Dans cette configuration, les revêtements de l'assise 38 et du dossier 36 des sièges arrière sont agencés au contact du plancher 26.

Cette configuration permet de bénéficier d'un faux-plancher reposant sur le plancher 26 qui est utilisable pour le transport de charges, tout en conservant l'utilité des sièges 20 intermédiaires et tout en conservant à bord les sièges 24 arrière pour un transport ultérieur de passagers.

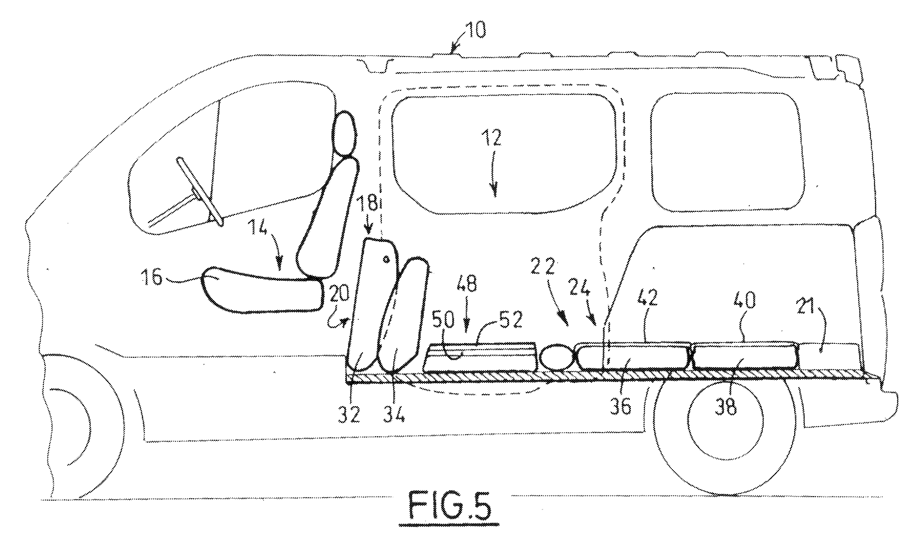

Selon une deuxième configuration supplémentaire utilitaire de l'habitacle 11 qui a été représentée à la figure 5, les sièges latéraux 20 intermédiaires sont repliés dossier 32 contre assise 34 et il sont rangés dans une position verticale au dos des sièges avants 16. Les sièges 24 latéraux arrière sont développés à plat sur le plancher 26 du véhicule de manière qu'une face inférieure 40 de l'assise 38 et une face arrière 42 du dossier 36 des sièges latéraux arrière constituent un faux-plancher plat du véhicule.

Dans cette configuration, les revêtements de l'assise 38 et du dossier 36 des sièges arrière sont agencés au contact du plancher 26.

Cette configuration permet de bénéficier d'un faux-plancher reposant sur le plancher 26 qui est agrandi par rapport à celui de la première configuration utilitaire.

Ce plancher 26 est utilisable pour le transport de charges, et il permet de conserver à bord les sièges 20 intermédiaires et les sièges 24 arrière pour un transport ultérieur de passagers.

Dans ces deux configurations, un coffret 21 de rangement amovible est posé en arrière des sièges arrière 24 déployés de manière à agrandir les faux planchers obtenus vers l'arrière et bénéficier ainsi d'un volume de chargement. Ce coffret 21 permet aussi d'éviter qu'il n'y ait de cavité à l'arrière du faux-plancher, créant une rupture de la concavité de celui-ci.

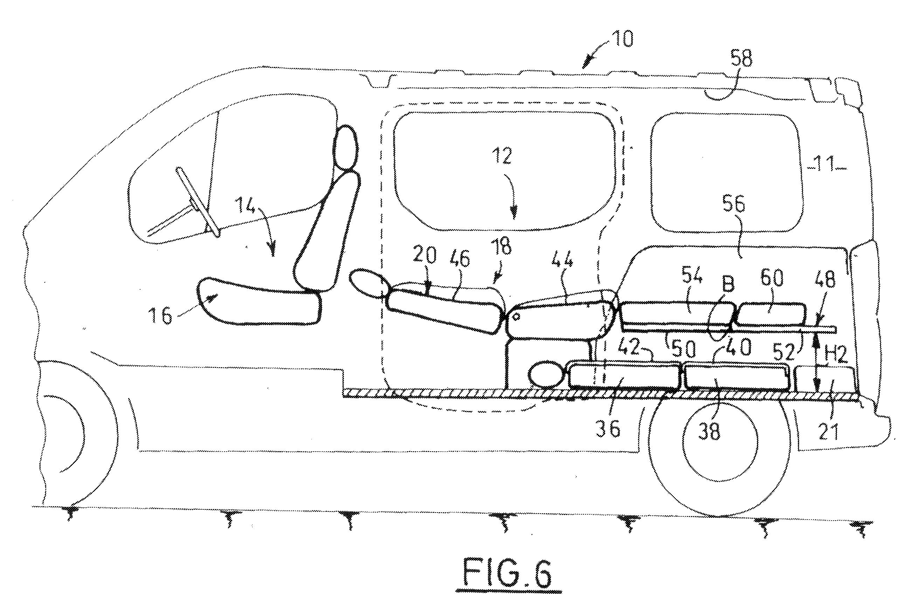

Selon une troisième configuration supplémentaire de couchage de l'habitacle 11 qui a été représentée à la figure 6, les sièges 24 latéraux arrière sont développés à plat sur le plancher 26 du véhicule et les sièges latéraux 20 intermédiaires sont développés au dessus du niveau des sièges 24 latéraux arrière de manière qu'une face supérieure 44 de l'assise 34 et une face avant 46 du dossier 32 des sièges latéraux 20 intermédiaires constituent une couchette.

Avantageusement, l'agencement qui a été représenté aux figures 2 à 9 comporte une tablette arrière 48, qui comporte deux panneaux 50 et 52 articulés l'un par rapport à l'autre selon un axe "B" transversal, dont l'un comporte une garniture 54 souple d'une épaisseur correspondant à cette de l'assise 34, 38 ou du dossier 32, 36 d'un siège 20, 24.

Dans la configuration de transport de passagers qui a été représentée à la figure 2, la tablette arrière 48 est accrochée à des éléments latéraux du véhicule, par exemple des coffres 56 latéraux agencés sur les côtés du compartiment à bagages du véhicule. Plus particulièrement, la tablette arrière 48 est agencée en arrière des sièges 24 latéraux arrière, à une première hauteur "H1" déterminée, sa garniture 54 souple tournée vers le plancher 26, de manière à délimiter un compartiment à bagages.

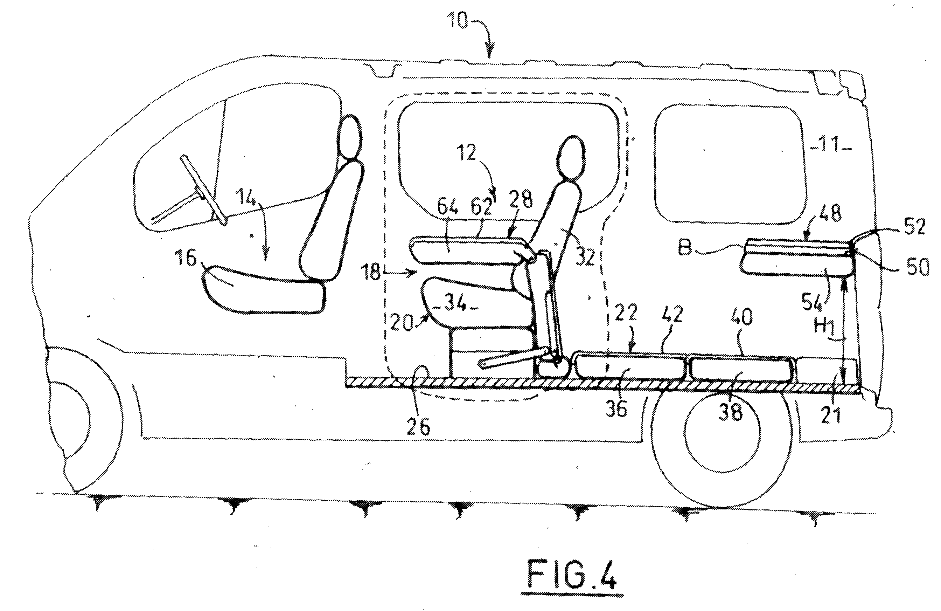

La tablette 48 peut aussi occuper cette position dans la première configuration supplémentaire utilitaire, comme représenté à la figure 3 ou dans la variante de cette configuration qui a été représentée à la figure 4, les panneaux 50 et 52 étant indifféremment dépliés ou repliés.

Dans la deuxième configuration supplémentaire utilitaire qui a été représentée à la figure 5, la tablette arrière 48 est susceptible d'être posée, avec ses panneaux 50, 52 repliés l'un contre l'autre, sur le plancher plat 26 du véhicule dans une position longitudinale agencée entre les sièges latéraux 20 intermédiaires agencés en position verticale et les sièges 24 latéraux arrière déployés.

De cette manière, la tablette 48 présente l'avantage de prolonger vers l'avant le faux plancher plat du véhicule, permettant ainsi le transport de charges de grande longueur.

Dans la troisième configuration supplémentaire de couchage de l'habitacle qui a été représentée à la figure 6, la tablette 48 est susceptible d'être accrochée à des éléments latéraux du véhicule, notamment les coffres 56, en arrière des sièges 20 latéraux intermédiaires, à une seconde hauteur "H2" déterminée correspondant à celle des sièges latéraux 20 intermédiaires. Dans cette configuration, la garniture souple 54 est tournée vers un pavillon 58 du véhicule, et une garniture souple amovible supplémentaire 60 est posée sur le panneau 52 libre. Cette configuration permet de prolonger les couchettes du véhicule d'une longueur égale à la longueur cumulée des deux panneaux 50, 52.

Avantageusement, lorsqu'elle n'est pas utilisée pour prolonger les couchettes, la garniture souple amovible supplémentaire 60 peut être rangée dans un des coffres latéraux 56.

Il sera compris que cette disposition n'est pas limitative de l'invention, et que la tablette 48 pourrait ne comporter qu'un panneau ou comporter un nombre supérieur de panneaux articulés, sans changer la nature de l'invention,

Conformément à l'invention, le siège 28 central peut lui aussi participer avantageusement aux différentes configurations du véhicule.

Ainsi, dans la configuration d'occupation de l'habitacle de la figure 1, le siège 28 est mobile entre au moins une position dans laquelle il est agencé entre les sièges 20 latéraux intermédiaires et au moins une position dans laquelle il est agencé entre les sièges 24 latéraux arrière.

A partir de cette position, le siège 28 peut être ouvert pour proposer une place supplémentaire, comme représenté aux figures 1 et 2, ou bien être basculé pour que la face arrière du dossier du siège central 28 forme une tablette supplémentaire agencée entre les sièges intermédiaires 20 ou bien entre les sièges arrière 24.

Le basculement du siège central 28 est aussi possible dans la première configuration supplémentaire utilitaire, comme le représente la figure 4 dans laquelle la face arrière 62 du dossier 64 du siège central 28 forme une tablette agencée entre les sièges intermédiaires 20.

Dans la deuxième configuration utilitaire de l'habitacle représentée à la figure 5, le siège central 28 est susceptible d'être développé à plat sur le plancher 26 du véhicule de manière qu'une face inférieure de l'assise et une face arrière du dossier du siège central fassent partie du faux-plancher plat du véhicule,

Dans la troisième configuration de couchage de l'habitacle, le siège central 28 est susceptible d'être agencé entre les sièges 20 intermédiaires et développé à plat au niveau "H2", c'est à dire au dessus du niveau des sièges 24 latéraux arrière, de manière qu'une face supérieure de l'assise et une face avant du dossier du siège central fasse partie de la couchette.

Par ailleurs, l'agencement selon l'invention a ceci de particulier que les sièges avant 16 sont eux aussi pivotants, ce qui permet de bénéficier d'une configuration dans laquelle les sièges avant 16 et les sièges intermédiaires 20 sont agencés en vis à vis.

Enfin, l'agencement 12 comporte une tablette 66 qui est susceptible d'être fixée à au moins un élément latéral du véhicule, de manière à être agencée entre deux paires 14, 18 ou 18, 22 de sièges 16, 20 ou 22, que ces paires de sièges soient en vis à vis ou non. Cette conception permet une grande modularité de l'habitacle.

L'invention propose donc un véhicule automobile doté d'une grande modularité et pouvant tour à tour être transformé en véhicule utilitaire comportant au moins deux places assises, en minibus comportant sept places assises, ou encore en véhicule familial comportant cinq places assises.

## Revendications

1. Agencement (12) pour un habitacle (11) de véhicule automobile (10), du type dans lequel un plancher (26) plat du véhicule porte au moins une paire (14) de sièges (16) latéraux avant indépendants, une paire (18) de sièges (20) latéraux intermédiaires indépendants et amovibles et une paire (22) de sièges (24) latéraux arrière indépendants, les sièges (16, 20, 24) de chaque paire (14, 18, 22) étant agencés symétriquement de part et d'autre d'un axe (A) longitudinal médian du véhicule (10), et chaque siège (16, 20, 24) comportant au moins un dossier (32, 36) articulé sur une assise (34, 38) du type qui est susceptible de déterminer au moins une configuration d'occupation de l'habitacle par des passagers dans laquelle les sièges (16, 20, 24) sont ouverts pour permettre l'accueil de passagers,
**caractérisé en ce que** au moins les sièges (24) latéraux arrière sont susceptibles d'être développés à plat sur le plancher (26) pour permettre différentes configurations supplémentaires de l'habitacle du véhicule,

2. Agencement (12) selon la revendication précédente, **caractérisé en ce que** selon une première configuration supplémentaire utilitaire de l'habitacle (11), les sièges latéraux (20) intermédiaires sont ouverts pour permettre l'accueil de passagers et les sièges (24) latéraux arrière sont développés à plat sur le plancher (26) du véhicule de manière qu'une face inférieure (40) de l'assise (38) et une face arrière (42) du dossier (36) des sièges (24) latéraux arrière constituent un faux-plancher plat du véhicule,

3. Agencement (12) selon l'une des revendications précédentes, **caractérisé en ce que** selon une deuxième configuration supplémentaire unitaire de l'habitacle (11), les sièges latéraux (20) intermédiaires sont repliés dossier (32) contre assise (34) et rangés dans une position verticale au dos des sièges avants (16), et les sièges (24) latéraux arrière sont développés à plat sur le plancher (26) du véhicule de manière qu'une face (40) inférieure de l'assise (38) et une face arrière (42) du dossier (36) des sièges latéraux (24) arrière constituent un faux-plancher plat du véhicule.

4. Agencement (12) selon l'une des revendications précédentes, **caractérisé en ce que** selon une troisième configuration supplémentaire de couchage de l'habitacle (11), les sièges (24) latéraux arrière sont développés sur le plancher (26) du véhicule et les sièges latéraux (20) intermédiaires sont développés à plat au dessus du niveau des sièges (24) latéraux arrière de manière qu'une face supérieure (44) de l'assise (34) et une face avant (46) du dossier (32) des sièges (20) latéraux intermédiaires constituent chacun une couchette.

5. Agencement (12) selon l'une des revendications 3 ou 4, **caractérisé en ce qu'**il comporte une tablette (48) arrière, qui comporte au moins un panneau (50, 52) comportant une garniture (54) souple d'une épaisseur correspondant à celle de l'assise ou du dossier d'un siège, et qui :
- dans la configuration d'occupation de l'habitacle par des passagers, est accrochée à des éléments (56) latéraux du véhicule, en arrière des sièges (24) latéraux arrière, à une première hauteur (H1) déterminée, la garniture (54) souple tournée vers le plancher (26), pour délimiter un compartiment à bagages.
- dans la deuxième configuration supplémentaire utilitaire est susceptible d'être posée, panneaux (50, 52) repliés, sur le plancher (26) plat du véhicule entre les sièges latéraux (20) intermédiaires verticaux et les sièges (24) latéraux arrière déployés pour prolonger le faux plancher plat du véhicule, et
- dans la troisième configuration supplémentaire de couchage de l'habitacle (11), est susceptible d'être accrochée à des éléments latéraux (56) du véhicule en arrière des sièges (24) latéraux intermédiaires, à une seconde hauteur (H2) déterminée correspondant à celle des sièges (20) latéraux intermédiaires, la garniture (54) souple tournée vers un pavillon du véhicule.

6. Agencement (12) selon la revendication précédente, **caractérisé en ce que** la tablette (48) arrière comporte deux panneau (50, 52) articulés l'un par rapport à l'autre dont l'un comporte la garniture (54) souple, **en ce que** dans la deuxième configuration supplémentaire utilitaire, la tablette (48) est susceptible d'être posée, panneaux (50, 52) repliés, sur le plancher (26) plat du véhicule entre les sièges latéraux (20) intermédiaires verticaux et les sièges (24) latéraux arrière déployés pour prolonger le faux plancher plat du véhicule, et **en ce que** dans la troisième configuration supplémentaire de couchage de l'habitacle (11), la tablette (48) est susceptible d'être accrochée aux éléments latéraux (56) du véhicule en arrière des sièges (24) latéraux intermédiaires, à la seconde hauteur (H2) déterminée correspondant à celle des sièges (20) latéraux intermédiaires, la garniture (54) souple d'un panneau (50) tournée vers un pavillon du véhicule, et une garniture (60) souple amovible supplémentaire posée sur le panneau (52) libre, pour prolonger les couchettes du véhicule.

7. Agencement (12) selon l'une quelconque des revendications précédentes, **caractérisé en ce que** les sièges (20) intermédiaires sont pivotants.

8. Agencement (12) selon la revendication précédente prise en combinaison avec l'une des revendications 4 à 6, **caractérisé en ce que**, dans la troisième configuration supplémentaire de couchage de l'habitacle, les sièges (20) intermédiaires sont pivotés vers l'arrière du véhicule.

9. Agencement (12) selon l'une quelconque des revendications précédentes, **caractérisé en ce qu'**il comporte au moins un siège (28) central qui est coulissant sur le plancher suivant l'axe (A) longitudinal médian du véhicule, et qui est susceptible :
- dans la configuration d'occupation de l'habitacle, d'être agencé entre au moins une position dans laquelle le siège (28) central est agencé entre les sièges (20) latéraux intermédiaires et au moins une position dans laquelle le siège (28) central est agencé entre les sièges (24) latéraux arrière, et :
• d'être ouvert pour proposer une place supplémentaire, ou bien
• d'être basculé pour que la face arrière (62) du dossier (64) du siège central (28) forme une tablette agencée entre les sièges (20) intermédiaires ou entre les sièges (24) arrière,
- dans la première configuration utilitaire de l'habitacle, d'être basculé pour que la face arrière (62) du dossier (64) du siège central (28) forme une tablette agencée entre les sièges (20) intermédiaires,
- dans la deuxième configuration utilitaire de l'habitacle, d'être développé à plat sur le plancher du véhicule de manière qu'une face inférieure de l'assise et une face arrière du dossier du siège central (28) fassent partie du faux-plancher plat du véhicule,
- dans la troisième configuration de couchage de l'habitacle, d'être agencé entre les sièges (20) intermédiaires et développé à plat au dessus du niveau des sièges (24) latéraux arrière de manière qu'une face supérieure de l'assise et une face avant du dossier du siège central (28) fasse partie de la couchette.

10. Agencement (12) selon l'une quelconque des revendications précédentes, **caractérisé en ce qu'**il comporte au moins un coffret (21) de rangement destiné à être agencé en arrière des sièges (24) arrière déployés, pour prolonger le volume de chargement vers l'arrière du véhicule.

11. Agencement (12) selon l'une quelconque des revendications 7 à 10, **caractérisé en ce que** les sièges (16) avant sont pivotants.

12. Agencement (12) selon l'une quelconque des revendications 7 à 11 **caractérisé en ce qu'**il comporte une tablette (66) qui est susceptible d'être fixée à au moins un élément latéral du véhicule entre deux paires (14, 18, 22) de sièges (16, 20, 24).
